# EUROPEAN PATENT APPLICATION

(11) **EP 1 178 410 A1**
(43) Date of publication of application: **06.02.2002**
(21) Application number: 00116881.4
(22) Date of filing: 04.08.2000
(51) Int. Cl.: G06F 17/30

(54) **Fortune-telling oriented method and system for dynamically changing a web page**

(71) Applicant: PCYI Network Corporation, Taipei (TW)
(72) Inventor: Chen, Chih-min, Taipei (TW)
(74) Representative: TER MEER STEINMEISTER & PARTNER GbR

(57) **Abstract**

A method for dynamically changing a fortune-telling oriented web page, which first performs a fortune analysis for a user, then generates an appearance setting according to the fortune analysis result, and finally produces a personalized web page according to the appearance setting so that the appearance of the produced personalized web page will dynamically change according to the fortune analysis result of the user which will in turn attract users to use the personalized web page. The invention also discloses a corresponding system for dynamically changing a fortune-telling oriented web page.

## Description

### BACKGROUND OF THE INVENTION

### Field of Invention

The invention relates to a method for dynamically changing a fortune-telling oriented web page and the system for the same.

### Related Art

Along with the development of the Internet, commercial activities performed over the World Wide Web (WWW) have become very popular. After the proprietor sets up a web site, a user can enter the web site through the Internet and browse the web site content using the various browsers on personal computers. If the user needs some items or services, then the proprietor and the user conduct business in various ways.

Since the gain from the website is proportional to the times users log onto the web site, it is therefore very important for the proprietor to know how to attract users to log on to their web site. In the prior art, the user set some settings, such as the information categories that interest him, after logging onto the web site, then in the future he will see only the information of interest. For example, if a user selects certain news categories on a news web, he will only see the news that interests him. If the web site provides electronic mailboxes for the user, he can see his email in his personalized mailbox directly.

However, this method only changes the content of the web page but not the appearance thereof. Those who are familiar with commercial marketing theories know that the packaging and appearance of merchandises will directly affect consumer attraction, which is particularly so when there is not much difference in the content of the merchandise between different sites. For the same reason, if, in addition to the web site context, the appearance of the web site can change dynamically, then it will attract more users.

Therefore, how to dynamically change the appearance of the web page for different users to attract more users to logon to the site has become an important issue to be solved.

### SUMMARY OF THE INVENTION

In view of the foregoing, it is an object of the invention to provide a method and the corresponding system for dynamically changing a fortune-telling oriented web page, which can then dynamically change the appearance of the web page according to the fortune analysis result performed for the user so as to attract more users.

To achieve the above object, the invention provides a method for dynamically changing the appearance of a fortune-telling oriented web page, which method first performs a fortune analysis for a user, then generates an appearance setting accordingly, and finally produces a personalizes web page according to the appearance setting so that the appearance of the produced personalized web page will dynamically change according to the fortune analysis result performed for the user.

The invention also provides a system for dynamically changing a fortune-telling oriented web page, which comprises a fortune analysis module, a memory module and a personalized web page generating module. The fortune analysis module performs a fortune analysis for a user and generates a fortune analysis result. The memory module stores a web page template. The personalized web page generating module generates an appearance setting according to the fortune analysis result and produces a personalized web page in accordance with the web page template. The appearance of the personalized web page will then dynamically change according to the fortune analysis result of the user so as to attract users to the personalized web pages.

The method and system for dynamically changing a fortune-telling oriented web page of the invention can dynamically change the appearance of web pages. Therefore, they are very attractive to users because the users can see personalized web page designed specifically for their different personalities. For the web site proprietor, dynamically changing the appearance of the web page for different users will attract more users to log on, increasing the number of hits the web site receives.

### BRIEF DESCRIPTION OF THE DRAWINGS

The invention will become more fully understood from the detailed description given in the herein below illustrations, and thus are not meant to limit the scope of the invention, and wherein:
FIG. 1 is a flow chart showing the method for dynamically changing a fortune-telling oriented web site according to a preferred embodiment of the invention;
FIG. 2 is a flow chart showing the method for dynamically changing a fortune-telling oriented web site according to another preferred embodiment of the invention;
FIG. 3 is a schematic view of the system for dynamically changing a fortune-telling oriented web site according to a preferred embodiment of the invention;
FIG. 4(A) is a schematic view showing an example of a web page template; and
FIG. 4(B) is a schematic view showing an example of the correspondence of each appearance setting to each database.

In the various drawings, the same references relate to the same elements.

### DETAILED DESCRIPTION OF THE INVENTION

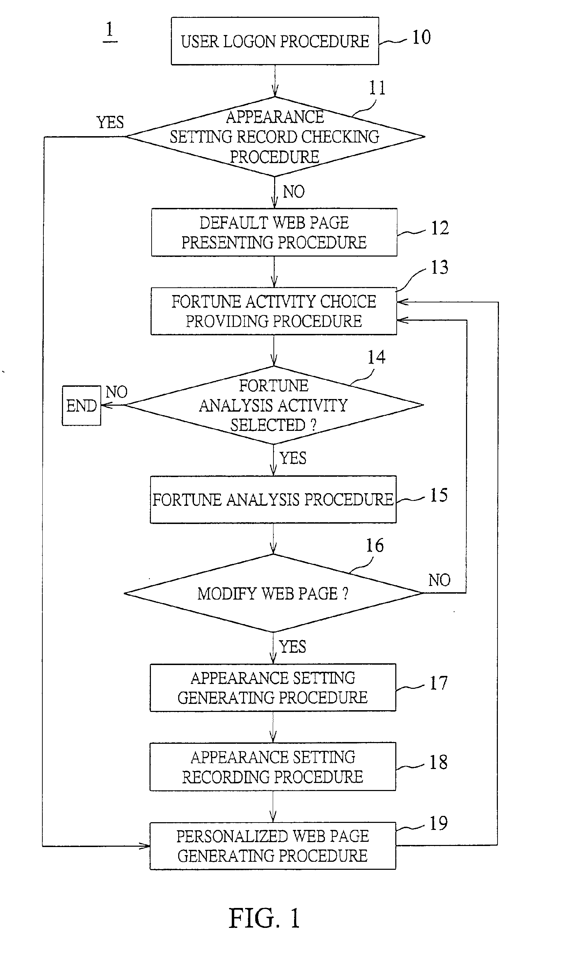

Referring to FIG. 1, the method for dynamically changing a fortune-telling oriented web page 1 according to a preferred embodiment of the invention is implemented on a web server. In a procedure of the user logging on 10, the user enters his name and password to log onto the web site and the web server then identifies the user according to the name and password the user enters.

Once the user is identified, the server then performs an appearance setting record checking procedure 11. In this procedure, the web server checks whether the user has a personalized web page appearance setting record. If not, then the server performs a default web page presentation procedure 12, in which the web server provides a web page with a default appearance to the user. That is, if the user does not have a personalized web page appearance setting record, he will see this default web page. If the user has a personalized web page appearance setting recorded in the web server, then the server performs a personalized web page generating procedure 19, which is to be described later.

After the default web page presentation procedure 12, the server performs a fortune analysis activity choice providing procedure 13, in which the web server provides a selection of fortune analyses items for the user to choose from. In a fortune analysis activity selection procedure 14, the web server determines whether the user wants to perform a fortune analysis. In other words, if the user selects a specific fortune analysis activity, such as name analysis, in the fortune analysis activity selection procedure 14, then the web server performs a subsequent fortune analysis procedure 15 to analyze the fortune of the user. Of course, if the user does not want to perform any fortune analysis in the fortune analysis activity selection procedure 14, he can choose other activities or log out of the web server.

After the fortune analysis procedure 15, the web server performs an inquiry procedure 16, in which the web server asks the user whether he wants to modify his personalized web page appearance accordingly. If the user wants to change his personalized web page appearance accordingly, then the server performs an appearance setting generating procedure 17 to modify the personalized web page appearance. If the user chooses not to, then the original personalized web page appearance is kept.

The appearance setting generating procedure 17 generates the user's personalized web page appearance setting according to the fortune analysis result performed for the user. For example, the web server can find out the user's lucky color from his birthday and set the lucky color as the background color of his personalized web page. The web server can also generates the user's personalized pattern from his birthday and gender according to the five elements (gold, wood, water, fire and earth) or the astrology sign of the user and set the pattern as one of the patterns in the personalized web page.

The web server then performs an appearance setting recording procedure 18 to record the generated personalized web page appearance setting, and to generate and present a personalized web page to the user according to the personalized web page appearance setting in the personalized web page generating procedure 19. If in the appearance setting record checking procedure 11 the web server finds that a personalized web page appearance setting for the user is recorded, then it directly continues to the personalized web page generating procedure 19. Finally, the server returns to the fortune activity choice providing procedure 13 to wait for the user's next fortune activity selection.

According to the method for dynamically changing a fortune-telling oriented web page in the embodiment, the personalized web page of the user can be dynamically changed as the user performs the fortune activities. In addition, since the user may have different fortune analysis results at different times, the personalized web page appearance may change accordingly even if the user performs the same fortune analysis. For example, if the fortune analysis results all indicate that the user has recently had bad luck, the server then uses a brighter color or a more colorful background to inspire the user. If the fortune analysis results indicate that the user has recently been anxious, the server then uses a less bright color to comfort the user. Therefore, the user can see a different appearance in his personalized web page under different circumstances.

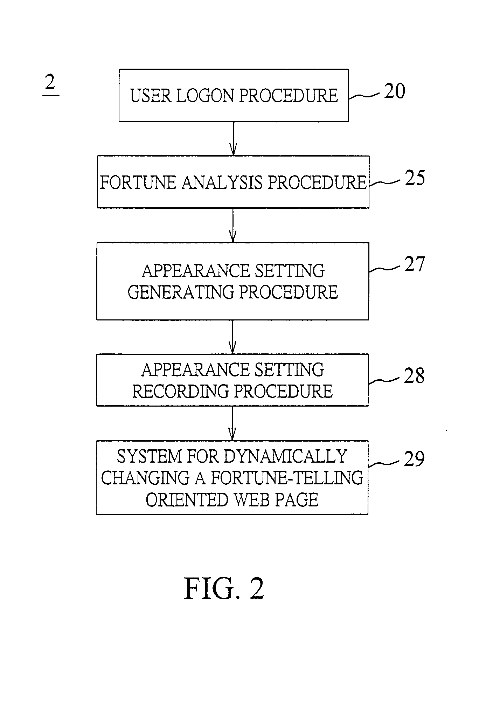

Referring to FIG. 2, a method for dynamically changing a fortune-telling oriented web page 2 according to another embodiment of the invention is also implemented over a web server. The difference of the current method from the previous one is in that the user does not need to select a fortune analysis activity in the current embodiment. The web server automatically performs a fortune analysis for the user. The method for dynamically changing a fortune-telling oriented web page 2 is explained in detail hereinafter.

In the user logging on procedure 20, the user enters his nickname and password to log onto the web site. In a fortune analysis procedure 25, the web server automatically performs a fortune analysis for the user. For example, the user's name, gender or birthday is used to predict his fortune for a day or a week. Once the fortune analysis result is obtained, an appearance setting generating procedure 27, an appearance setting recording procedure 28 and a personalized web page generating procedure 29, corresponding to the above-mentioned procedures 17, 18, 19, are performed to generate the user's personalized web page appearance setting, to record the personalized web page appearance setting and to present the generated personalized web page to the user.

In this embodiment, the web server automatically performs a fortune analysis for the user to generate a personalized web page. The user can obtain a personalized web page generated according to the fortune analysis result without making a selection.

It should be noted that both method embodiments presented in FIG. 1 and FIG. 2 can be applied simultaneously without conflict. That is, after the user logs on, the server can first perform a fortune analysis for the user automatically and generate a personalized web page and then provide fortune activity choices for the user to select from. It then further modifies the personalized web page of the user according to the fortune analysis result.

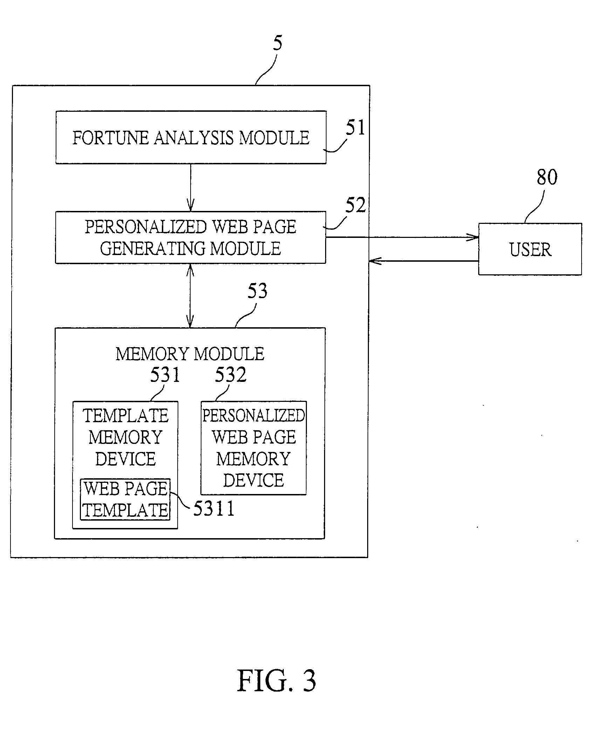

Referring to FIG. 3, the system for dynamically changing a fortune-telling oriented web page 5 according to a preferred embodiment of the invention comprises a fortune analysis module 51, a personalized web page generating module 52 and a memory module 53. The memory module 53 comprises a template memory device 531 and a personalized web page memory device 532. In the system 5, the fortune analysis module 51 performs a fortune analysis for a user 80, the personalized web page generating module 52 generates a personalized web page for the user 80 according to the analysis result of the fortune analysis module 51 and the web page template 5311 stored in the template memory device 531. This personalized web page is stored in the personalized web page memory device 532.

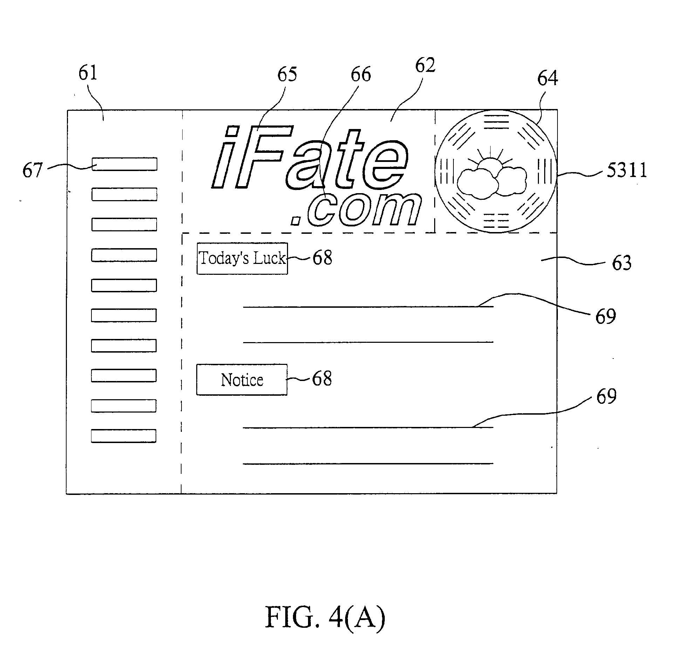

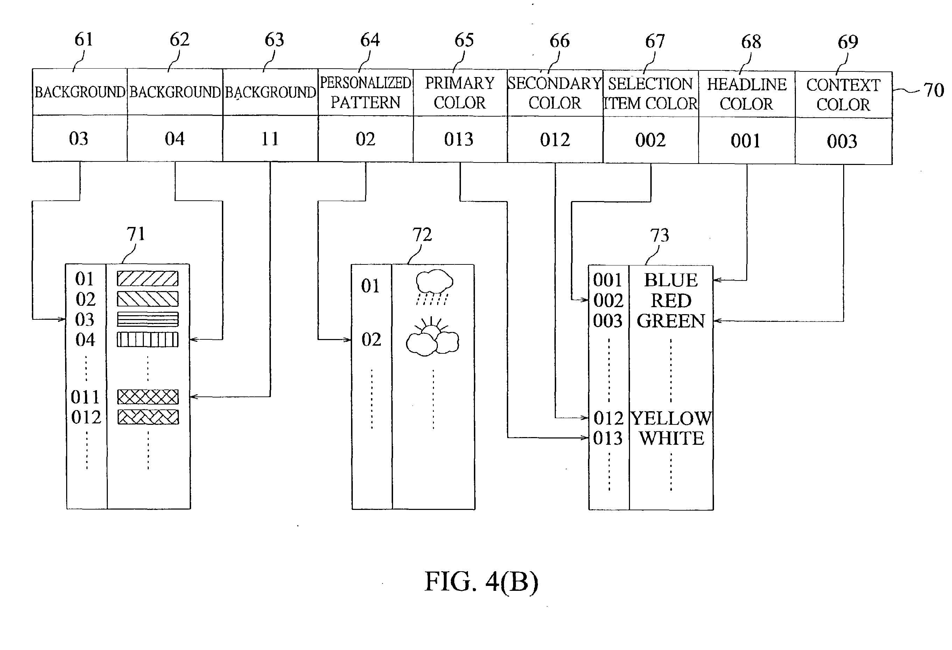

The web page template 5311 stored in the template memory device 531 includes the profile of the web page and the configuration of various patterns and colors. With reference to FIG. 4(A), the web page template shown in the drawing comprises four areas: the left area displays the fortune activity selections provided by the web server, the upper area is the logo of the web site, the upper right area shows the personalized pattern 64 of the user 80, and the central area displays the result of the selected fortune analysis activity. The settings of each area can be modified. For instance, the background 61 and the selection item color 67 in the left area, the background 62, the primary color 65 and secondary color 66 of the logo in the upper area, the personalized pattern 64 in the upper right area, and the headline color 68 and the context color 69 in the central area are modifiable.

The personalized web page memory device 532 stores the appearance setting of each personalized web page. Each appearance setting corresponds to a respective database for obtaining the corresponding appearance setting. Referring to FIG. 4(B), a table 70 stores each appearance setting of a personalized web page shown in FIG. 4(A). The appearance setting is linked to three databases, namely, the background database 71, the personalized pattern database 72 and the color database 73. For example, in the table 70, the appearance setting of the background 61 (the background in the left area of the web page template shown in FIG. 4(A)) is 03, and 03 corresponds to a horizontal wave pattern in the background database 71. Therefore, the left area of the user's personalized web page uses the horizontal wave pattern as the background. Of course, the appearance setting stored in the table 70 can be the appearance data themselves (that is, when the appearance data are colors, then the color codes can be directly stored in the table 70 without resorting to the color database 73). The background database 71, the personalized pattern database 72 or the color database 73 can be stored in the memory module 53 or any other memory device without departing from the spirit of the invention.

The contents of the table 70 are generated according to the fortune analysis result performed by the user 80 by the personalized web page generating module 52. That is, after the user 80 performs a fortune analysis, the fortune analysis module 51 transmits the fortune analysis result to the personalized web page generating module 52, which then generates a personalized web page for the user 80 accordingly. For instance, if the constellation of the user 80 is "fire-like", then the selected lucky color could be red or yellow. Then the appearance setting is set to various shades of red or yellow.

The appearance of a web page can be dynamically changed according to the method and system of the invention. Thus, the web page appearance will not be boring. Since the appearance is designed according to the fortune analysis result for the user, different personalized web pages can be created for different personalities. It is attractive to the user because he can see his personalized web page. It can increase the number of hits the web site receives because more users are attracted to log onto the system.

Although the invention has been described with reference to specific embodiments, this description should not be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A method for dynamically changing a fortune-telling oriented web page for providing a personalized web page to a user, which method comprises:
a fortune analysis procedure, which performs a fortune analysis for the user;
an appearance setting generating procedure, which generates an appearance setting for the personalized web page according to the fortune analysis result;
a personalized web page generating procedure, which generates the personalized web page according to the appearance setting so that the generated personalized web page appearance dynamically changes according to the fortune analysis result performed for the user in order to attract the user to use the personalized web page.

2. The method according to claim 1 further comprising a fortune activity choice providing procedure, which provides at least one fortune activity for the user to select.

3. The method according to claim 1 further comprising an appearance setting recording procedure, which records the appearance setting of the personalized web page.

4. The method according to claim 1 further comprising a default web page presenting procedure, which presents a default web page appearance to the user when the user does not have an appearance setting for his personalized web page.

5. The method according to claim 1 further comprising an inquiry procedure, which asks the user whether the user wants to modify the appearance setting of his personalized web page according to the fortune analysis result.

6. The method according to claim 1, wherein the appearance setting includes a color setting.

7. The method according to claim 1, wherein the appearance setting includes a pattern setting.

8. The method according to claim 1, wherein the appearance setting includes a background setting.

9. The method according to claim 1, wherein the fortune analysis procedure is a name analysis procedure.

10. The method according to claim 1, wherein the fortune analysis procedure is an astrology sign analysis procedure.

11. The method according to claim 1, wherein the fortune analysis procedure is a procedure that analyzes the same-day fortune.

12. A system for dynamically changing a fortune-telling oriented web page for providing a personalized web page to a user, which system comprises:
a fortune analysis module, which performs a fortune analysis for the user and
generates a fortune analysis result;
a memory module, which stores a web page template; and
a personalized web page generating module, which generates an appearance setting according to the fortune analysis result and generates the personalized web page using the web page template so that the appearance of the personalized web page will dynamically change according to the fortune analysis result obtained by the user in order to attract the user to use the personalized web page.

13. The system according to claim 12, wherein the memory module further comprises a template memory device storing the web page template.

14. The system according to claim 12, wherein the memory module further comprises a personalized web page memory device for storing the appearance setting.

15. The system according to claim 13, wherein the contents of the web page template include the profile, the configuration of patterns and colors of the personalized web page.

16. The system according to claim 12, wherein the memory module further comprises a database for storing appearance data represented by the appearance setting.

17. The system according to claim 16, wherein the personalized web page generating module corresponds the appearance setting in the database so as to obtain the appearance data represented by the appearance setting.

18. The system according to claim 16, wherein the database is a background database.

19. The system according to claim 16, wherein the database is a personalized pattern database.

20. The system according to claim 16, wherein the database is a color database.

21. The system according to claim 12, wherein the fortune analysis module is a name analysis module.

22. The system according to claim 12, wherein the fortune analysis module is an astrology sign analysis module.

23. The system according to claim 12, wherein the fortune analysis module is a module that analyzes the same-day fortune.
